# EUROPÄISCHE PATENTSCHRIFT

(11) **EP 1 129 877 B1**
(45) Veröffentlichungstag und Bekanntmachung des Hinweises auf die Patenterteilung: **19.09.2007**
(21) Anmeldenummer: 01104863.4
(22) Anmeldetag: 28.02.2001
(51) Int. Cl.: B60J 5/04

(54) **Seitenaufprallschutz**
Side impact protection
Protection en cas de choc latéral

(30) Priorität: 29.02.2000 DE 10009675
(43) Veröffentlichungstag der Anmeldung: 05.09.2001
(73) Patentinhaber: DURA Automotive Plettenberg Entwicklungs- und Vertriebs GmbH, 58840 Plettenberg (DE)
(72) Erfinder: Heuel, Gerhard, 57482 Wenden (DE)
(74) Vertreter: Zinnecker, Armin

(56) Entgegenhaltungen:
- DE-A- 4 337 082
- DE-A- 4 423 741
- DE-A- 19 633 637
- DE-A- 19 756 459
- DE-A- 19 914 344
- US-A- 5 221 121

## Beschreibung

Die Erfindung betrifft einen Seitenaufprallschutz für ein Fahrzeug, insbesondere ein Kraftfahrzeug, insbesondere eine Fahrzeug- oder Kraftfahrzeugtüre, mit einem Seitenaufprallträger.

Zum Schutz der Insassen von Kraftfahrzeugen werden Seitenaufprallträger verwendet, die in die Seitenwand des Kraftfahrzeugs, im allgemeinen in die Türe eines Kraftfahrzeugs, eingebaut sind.

Aus der DE 197 56 459 A1 ist ein Seitenaufprallschutz nach dem Oberbegriff des Anspruchs 1 bekannt.

Die DE 43 37 082 A1 offenbart eine Fahrzeugkarosserie mit einer Verstärkung der vorderen Tür und der hinteren Tür, die aus einer Anordnung von Drähten besteht. Die Drähte können derart festgelegt sein, daß eine Übertragung von Spannungen der Drähte auf die vordere Säule, die hintere Säule und den Schweller des Fahrzeugs ermöglicht werden.

Aus der gattungsgemäßen US-A-5 221 121 ist ein Verstärkungselement für die Karosserie eines Automobils bekannt, die als langgestrecktes spannbares, elastisches Teil ausgebildet ist, das an seinen Enden an der Karosserie befestigbar ist.

Aufgabe der Erfindung ist es, einen verbesserten Seitenaufprallschutz vorzuschlagen.

Erfindungsgemäß wird diese Aufgabe durch die Merkmale des Anspruchs 1 gelöst. Der Seitenaufprallschutz umfaßt einen Bowdenzug, der in einem Winkel zum Seitenaufprallträger verläuft. Der oder die Bowdenzüge sind durch eine oder mehrere Seitenwände des Seitenaufprallträgers geführt. Bei einem Aufprall wird die Seitenwand bzw. die Türe nach innen verformt. Hierdurch wird der Bowdenzug unter Spannung gesetzt. Durch den Bowdenzug kann ein großer Teil der Aufprallenergie aufgenommen werden.

Vorteilhaft ist es, wenn zwei Bowdenzüge vorgesehen sind, wobei sich die beiden Bowdenzüge vorzugsweise kreuzen. Bei Bedarf könnten auch noch mehr Bowdenzüge in der Seitenwand bzw. Türe angeordnet werden.

Vorteilhaft ist es, wenn der Seitenaufprallträger ein Profil mit einer oder mehreren Seitenwänden aufweist. Hierbei ist es vorteilhaft, die Bowdenzüge bzw. Seilzüge an der Unterseite des oder der Träger zu führen.

Vorzugsweise handelt es sich bei dem Profil um ein U-Profil. Vorteilhafte Alternativen hierzu sind Rohrprofile oder Hohlkammerprofile. Die Profile werden vorzugsweise in Aluminium oder Stahl ausgeführt.

Die Erfindung betrifft ferner ein Fahrzeug oder eine Fahrzeugtüre, die durch einen erfindungsgemäßen Seitenaufprallschutz gekennzeichnet sind.

Ein Ausführungsbeispiel der Erfindung wird nachstehend anhand der beigefügten Zeichnungen im einzelnen erläutert. In der Zeichnung zeigt
- Fig. 1: eine Kraftfahrzeugtüre in einer Seitenansicht,
- Fig. 2: einen Anlenkpunkt eines Bowdenzuges in einer vergrößerten Darstellung,
- Fig. 3: die Fahrzeugtüre gemäß Fig. 1 in einer Ansicht von oben,
- Fig. 4: einen Schnitt längs der Linie A-A in Fig. 3 und
- Fig. 5: eine alternative Querschnittsform für das Profil des Seitenaufprallträgers.

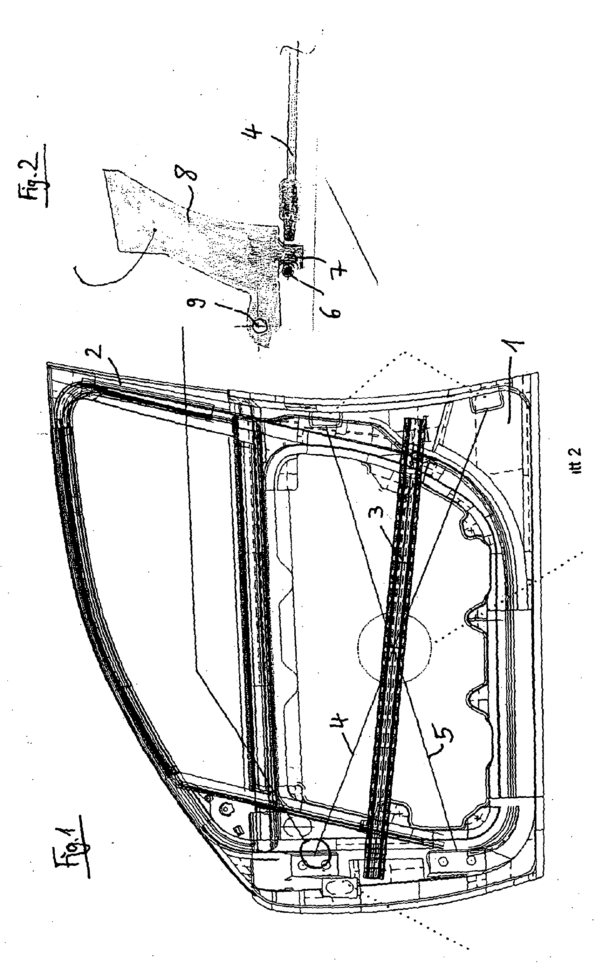

Die in Fig. 1 gezeigte Kraftfahrzeugtür besteht aus einem Türkasten 1, in den ein Türrahmen 2 eingeschraubt ist. Mit dem Türkasten 1 ist ein Seitenaufprallträger 3 verbunden, der im wesentlichen horizontal verläuft, der allerdings leicht von vorne oben nach hinten unten geneigt ist.

In dem Türkasten sind zwei Bowdenzüge 4, 5 vorhanden, die jeweils in einem Winkel zum Seitenaufprallträger 3 verlaufen. Die Bowdenzüge 4, 5 sind X-förmig angeordnet, wobei ihr Kreuzungspunkt im Bereich des Seitenaufprallträgers 3 liegt. Sie können aus Seilen, beispielsweise Drahtseilen bestehen, sie können allerdings auch als Stangen, vorzugsweise aus Metall, realisiert sein.

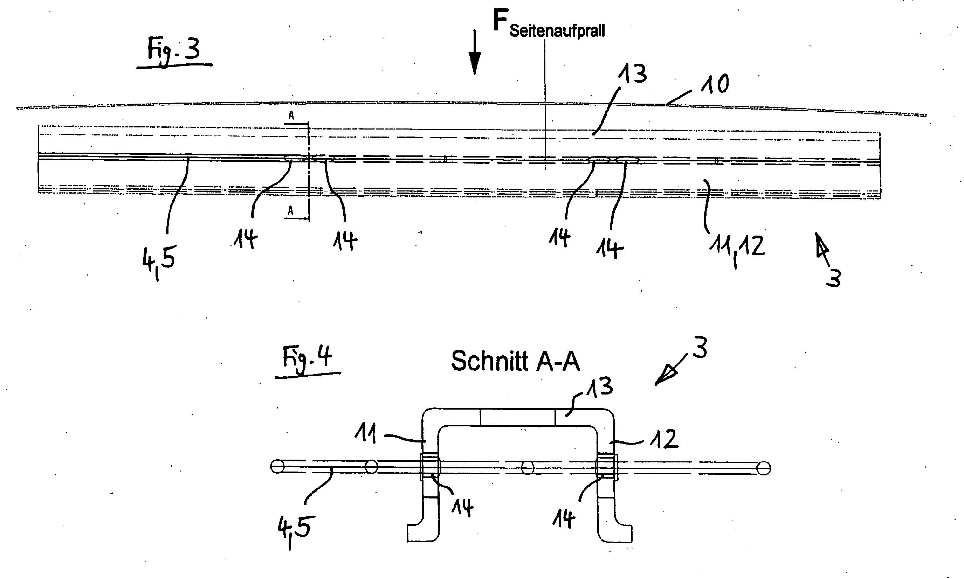

Die Bowdenzüge 4, 5 sind mit dem Türkasten 1 verbunden. Eine Verbindungsmöglichkeit ist in Fig. 2 dargestellt. Dort ist der Bowdenzug 4 mit einer an seinem Ende befindlichen Öse 6 in einen Vorsprung 7 eingehängt, der an einem Scharnier 8 vorgesehen ist, das um eine horizontale Achse 9 schwenkbar ist.

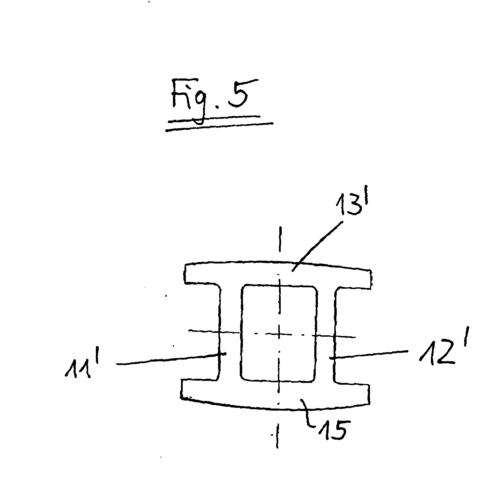

Der Seitenaufprallträger 3 ist in der aus Fig. 3 ersichtlichen Weise innerhalb der Außenhaut 10 der Kraftfahrzeugtüre angeordnet. Er weist ein U-förmiges Profil auf, das in Fig. 4 im Querschnitt dargestellt ist und das aus den Seitenteilen 11 und 12 sowie der Basis 13 besteht. Die Basis 13 ist der Außenhaut 10 zugewandt. In den Seitenteilen 11 und 12 sind Löcher 14 vorgesehen, durch die die Bowdenzüge 4, 5 hindurchtreten können. Die Bowdenzüge 4, 5 sind durch die Seitenteile 11, 12 des U-Profils des Seitenaufprallträgers 3 geführt.

Durch die Erfindung wird ein Seitenaufprallträger mit Bowdenzügen geschaffen, der die Insassen eines Fahrzeugs, insbesondere eines Kraftfahrzeugs, im Fall eines Seitenaufpralls bzw. "Side Impact" schützt. Ein besonderer Vorteil liegt darin, daß eine überaus platzsparende Anordnung möglich ist. Im Falle eines Seitenaufpralls wird die Eindringtiefe in der Tür zum Fahrzeugraum vermindert. Durch die im Ausführungsbeispiel gezeigte 6-Punkt-Anbindung kann die Energieaufnahme und - verteilung optimiert werden.

In Fig. 5 ist eine abgewandelte Ausführungsform gezeigt, bei der der Seitenaufprallträger ein Hohlkammerprofil aufweist, das aus den Seitenteilen 11' und 12' sowie den Basisteilen 13' und 15 besteht. Die Basisteile 13' und 15 ragen jeweils seitlich über die Seitenteile 11' und 12' hinaus. Anstelle eines Hohlkammerprofils könnte auch ein Rohrprofil verwendet werden. Die Profile sind vorzugsweise in Aluminium oder Stahl ausgeführt.

## Patentansprüche

1. Seitenaufprallschutz für ein Fahrzeug, insbesondere für eine Fahrzeugtüre, mit einem Seitenaufprallträger (3),
**gekennzeichnet durch**
einen Bowdenzug (4, 5), der in einem Winkel zum Seitenaufprallträger (3) verläuft und der **durch** die Seitenwand bzw. Seitenwände des Seitenaufprallträgers (3) geführt ist.

2. Seitenaufprallschutz nach Anspruch 1, **dadurch gekennzeichnet, daß** zwei Bowdenzüge (4, 5) vorhanden sind.

3. Seitenaufprallschutz nach Anspruch 2, **dadurch gekennzeichnet, daß** sich die Bowdenzüge (4, 5) kreuzen.

4. Seitenaufprallschutz nach einem vorhergehenden Ansprüche, **dadurch gekennzeichnet, daß** der Seitenaufprallträger (3) ein U-Profil oder ein Rohrprofil oder ein Hohlkammerprofil aufweist, die vorzugsweise in Stahl oder Aluminium aus/geführt sind.

5. Seitenaufprallschutz nach einem der vorhergehenden Ansprüche, **dadurch gekennzeichnet, daß** der bzw. die Bowdenzüge (4, 5) an der Unterseite des Seitenaufprallträgers (3) geführt sind.

6. Fahrzeug oder Fahrzeugtüre, **gekennzeichnet durch** einen Seitenaufprallschutz nach einem der Ansprüche 1 bis 5.

## Claims

1. Side impact protection for a vehicle, in particular for a vehicle door, with a side impact support (3), **characterized by** a Bowden cable (4, 5) which runs at an angle to the side impact support (3) and which is guided through the side wall or side walls of the side impact support (3).

2. Side impact protection according to Claim 1, **characterized in that** there are two Bowden cables (4, 5) .

3. Side impact protection according to Claim 2, **characterized in that** the Bowden cables (4, 5) intersect.

4. Side impact protection according to one of the preceding claims, **characterized in that** the side impact support (3) has a U-profile or a tubular profile or a hollow chamber profile, which profiles are preferably realized in steel or aluminium.

5. Side impact protection according to one of the preceding claims, **characterized in that** the Bowden cable or the Bowden cables (4, 5) are guided on the lower side of the side impact support (3).

6. Vehicle or vehicle door, **characterized by** side impact protection according to one of Claims 1 to 5.

## Revendications

1. Protection contre les chocs latéraux pour un véhicule, en particulier pour une porte de véhicule, avec un support contre les chocs latéraux (3),
**caractérisée en**
un câble Bowden (4, 5) qui s'étend en formant un angle avec le support contre les chocs latéraux (3) et qui est passé à travers une ou plusieurs parois latérales du support contre les chocs latéraux (3).

2. Protection contre les chocs latéraux selon la revendication 1, **caractérisée en ce que** deux câbles Bowden (4,5) sont présents.

3. Protection contre les chocs latéraux selon la revendication 2, **caractérisée en ce que** les câbles Bowden (4,5) se croisent.

4. Protection contre les chocs latéraux selon l'une quelconque des précédentes revendications, **caractérisée en ce que** le support contre les chocs latéraux (3) présente un profilé en U, ou un profilé tubulaire, ou un profilé creux qui sont réalisés de préférence en acier ou en aluminium.

5. Protection contre les chocs latéraux selon l'une quelconque des précédentes revendications, **caractérisée en ce que** le ou les câbles Bowden (4,5) sont montés sur le côté inférieur du support contre les chocs latéraux (3).

6. Véhicule ou porte de véhicule **caractérisée en** une protection contre les chocs latéraux selon les revendications 1 à 5.
